(19) Europäisches Patentamt
European Patent Office
Office européen des brevets

(11) **EP 2 095 859 B1**

(12) **FASCICULE DE BREVET EUROPEEN**

(45) Date de publication et mention
de la délivrance du brevet:
**16.05.2012 Bulletin 2012/20**

(51) Int Cl.:
***B01D 37/04*** *(2006.01)*

(21) Numéro de dépôt: **09152307.6**

(22) Date de dépôt: **06.02.2009**

(54) **Détection du colmatage d'un filtre d'un fluide**

Erkennung der Verstopfung eines Fluidfilters

Detection of the clogging of a fluid filter

(84) Etats contractants désignés:
**DE ES FR GB IT**

(30) Priorité: **06.02.2008 FR 0850744**

(43) Date de publication de la demande:
**02.09.2009 Bulletin 2009/36**

(73) Titulaire: **SNECMA**
**75015 Paris (FR)**

(72) Inventeurs:
• **Colotte, Baptiste**
**77000 Melun (FR)**
• **Gerez, Valerio**
**91330 Yerres (FR)**
• **Massot, Gilles**
**77950 Voisenon (FR)**

(74) Mandataire: **Besnard, Christophe Laurent et al**
**Cabinet Beau de Loménie**
**158, rue de l'Université**
**75340 Paris Cedex 07 (FR)**

(56) Documents cités:
**EP-A- 0 337 851     AT-B- 392 158**
**GB-A- 2 278 295     US-A- 4 932 205**

**Description**

La présente invention concerne le domaine des filtres de fluides.

L'invention concerne plus particulièrement un procédé et un dispositif de détection du colmatage d'un filtre d'un fluide.

Un circuit de fluide est généralement équipé d'un filtre dont la fonction est de filtrer le fluide, c'est-à-dire de le débarrasser des impuretés et des résidus qui risquent d'endommager les équipements dans lesquels ce fluide circule. Ce fluide est par exemple un lubrifiant tel que de l'huile, ou un carburant.

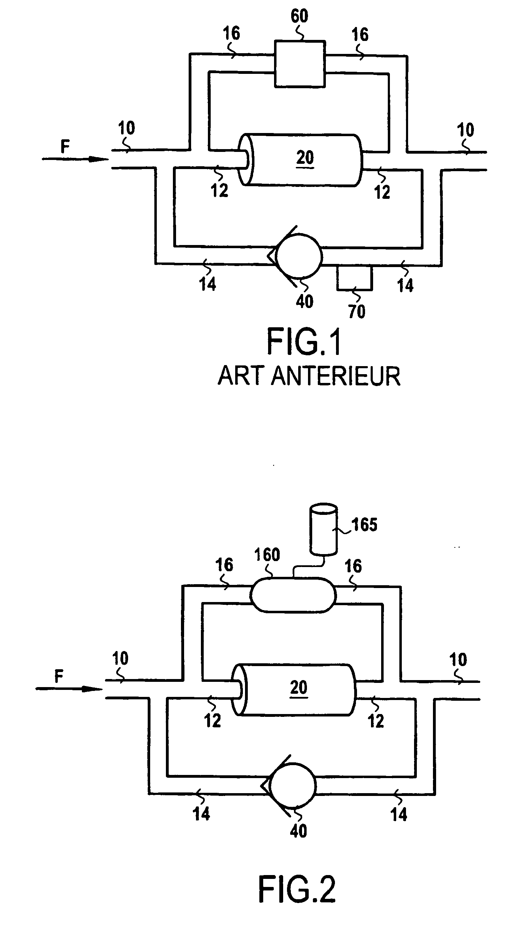

A l'usage, le filtre, en récupérant ces impuretés et résidus, se colmate petit à petit, jusqu'à finalement empêcher le passage du fluide du filtre. Pour empêcher cette situation, la branche du circuit de fluide sur laquelle est monté le filtre comprend en dérivation un circuit de contournement. Cette configuration est illustrée sur la figure 1, qui représente l'état de l'art. Dans la description qui suit les termes "amont" et "aval" sont définis par rapport au sens de circulation normal du fluide dans le circuit. Un filtre 20 est monté sur une branche principale 10 d'un circuit de fluide. En amont de ce filtre 20, la branche principale 10 se scinde en deux branches, une première branche 12 qui prolonge la branche principale 10 et sur laquelle est monté le filtre 20, et une deuxième branche 14 sur laquelle est monté un dispositif à clapet 40 (dispositif "bypass"). En aval du dispositif à clapet 40, la deuxième branche 14 rejoint la première branche 12 en aval du filtre 20 pour reformer la branche principale 10, de telle sorte que le dispositif à clapet 40 est monté en dérivation par rapport au filtre 20. En conséquence, la pression de fluide en amont du dispositif à clapet 40 est sensiblement égale à la pression P en amont du filtre 20. Le fluide circule sur la figure 1 de la gauche vers la droite comme illustré par la flèche F.

Lorsque le filtre n'est pas encrassé par les impuretés, c'est-à-dire au début de son fonctionnement, la pression $P_f$ immédiatement en aval du filtre 20 (sur la première branche 12) est sensiblement égale à la pression P en amont du filtre 20. De même, la pression $P_{dc}$ immédiatement en aval du dispositif à clapet 40 (sur la deuxième branche 14) est sensiblement égale à la pression P en amont du dispositif à clapet 40. Tout le fluide circule dans la branche 12, et le fluide dans la partie amont de la branche 14 est bloqué par le dispositif à clapet 40. En effet, ce dispositif à clapet 40 se comporte comme une valve qui ne laisse passer le fluide que lorsque la différence de pression $\Delta P = P - P_{dc}$ entre l'amont et l'aval de ce dispositif à clapet 40 est supérieure à une valeur critique $\Delta P_c$. Un tel dispositif à clapet 40 est connu de l'état de la technique. Il peut s'agir par exemple d'un dispositif à clapet à bille, dont le fonctionnement est rappelé brièvement ci-après.

Un dispositif à clapet à bille comporte un réservoir qui contient une bille, et un ressort. Lorsque le dispositif à clapet à bille est en position fermée, la bille est poussée par le ressort de telle sorte qu'elle bloque l'extrémité amont du réservoir, et empêche ainsi le fluide dans la partie de la branche située en amont du réservoir de pénétrer dans ce dernier. Lorsque la pression de fluide en amont du réservoir augmente par rapport à la pression de fluide en aval du réservoir, la force exercée par ce fluide contre la bille et donc contre le ressort augmente proportionnellement. Pour une certaine valeur critique $\Delta P_C$ de la différence de pression entre l'amont et l'aval du dispositif à clapet à bille, la force de réaction du ressort est exactement contrebalancée par la force générée par la pression $\Delta P_c$ sur la bille. Lorsque cette différence de pression dépasse cette valeur critique $\Delta P_c$, la bille est repoussée vers l'aval, et laisse donc passer le fluide au travers du dispositif à clapet à bille, qui est alors en position ouverte.

On comprend qu'au fur et à mesure que le filtre 20 se colmate à cause des impuretés qui s'y accumulent, la différence de pression $\Delta P = P - P_f$ entre l'amont et l'aval du filtre 20 augmente. La différence de pression entre l'amont et l'aval du dispositif à clapet 40 augmente également puisque cette différence est sensiblement égale à la différence de pression entre l'amont et l'aval du filtre, la première branche 12 portant le filtre 20 et la deuxième branche 14 portant le dispositif à clapet étant en parallèle. On calibre le dispositif à clapet 40 de telle sorte qu'il passe en position ouverte lorsque le filtre 20 devient totalement colmaté. Ainsi, la valeur critique $\Delta P_c$ est appelée valeur de colmatage (ou "différence de pression de colmatage").

Une fois le filtre 20 totalement colmaté, le fluide passe donc par la deuxième branche 14 du circuit, au travers du dispositif à clapet 40, et n'est donc plus filtré. Il parvient donc au mécanisme en aval auquel il est destiné (par exemple un moteur si le fluide est un carburant, un roulement ou autre pièce en mouvement si le fluide est une huile) rempli d'impuretés. Ces impuretés risquent d'endommager ce mécanisme, et il est donc indispensable en pratique de remplacer le filtre 20 avant son colmatage complet.

C'est pour cette raison qu'il est utilisé avec le filtre 20 un détecteur de pression qui informe l'utilisateur (par exemple le pilote) que le filtre 20 est sur le point de se colmater et qu'il faut le remplacer rapidement. La figure 1, qui représente l'état de l'art, montre un tel détecteur 60. Ce détecteur 60 est monté sur une troisième branche 16 qui est raccordée sur la première branche 12, de part et d'autre du filtre 20. Le détecteur 60 est un dispositif connu de l'état de la technique (il est par exemple du type manocontact), et sa structure n'est pas détaillée ici. Il fonctionne sur le principe suivant : lorsque la différence de pression $\Delta P_m$ entre l'amont et l'aval du détecteur 60 atteint une valeur de seuil $\Delta P_s$, le manocontact envoie un signal (typiquement un signal électrique) à l'utilisateur pour l'informer que la différence de pression $\Delta P_m$ entre l'amont et l'aval du détecteur 60 vient de franchir la valeur de seuil $\Delta P_s$. La valeur de seuil $\Delta P_s$ est

choisie inférieure à la valeur critique de colmatage $\Delta P_c$ (par exemple 90% de cette valeur critique). Ainsi, lorsque le signal provenant du détecteur 60 est reçu par l'utilisateur, ce dernier sait que le filtre 20 doit être remplacé prochainement, et il reste suffisamment de temps pour effectuer ce remplacement avant que le filtre 20 ne soit totalement colmaté. Cette information est relayée à l'équipe de maintenance, qui effectue alors ce changement en temps utile lors d'une prochaine opération de maintenance.

Dans le cas où le filtre 20 n'est pas encore complètement colmaté, un remplacement de ce dernier est suffisant avant la remise en service du circuit. Cependant, il se peut que l'équipe de maintenance n'effectue cette opération de maintenance que tardivement, et éventuellement après un colmatage complet du filtre 20. Mais dans ce cas, le filtre 20 été by-passé (dérivé) et le fluide a continué à circuler dans le circuit, des impuretés sont passées par le dispositif à clapet 40 dans tout le circuit en aval du filtre 20. Dans ce cas une inspection exhaustive et un nettoyage du circuit sont indispensables, et ce sont des opérations beaucoup plus lourdes que le remplacement d'un filtre. Il est donc nécessaire que l'équipe de maintenance sache, lorsqu'elle effectue son opération de maintenance, si le filtre est déjà colmaté et a été by-passé ou non.

C'est pour cela que la partie de la deuxième branche 14 située en aval du dispositif à clapet 40 est munie d'un indicateur visuel 70 (voir figure 1) qui indique si le fluide a circulé dans la partie aval de la deuxième branche 14, c'est-à-dire si le fluide est passé au travers du dispositif à clapet 40. L'indicateur visuel 70 indique un tel passage du fluide par inspection visuelle du dispositif à clapet 40. L'indicateur visuel 70 est par exemple un indicateur de type "pop-up", c'est-à-dire qu'il comporte une languette qui est initialement comprise à l'intérieur de l'indicateur visuel 70 (la languette n'est donc pas visible de l'extérieur). Un tel indicateur visuel 70 est connu de l'état de la technique, et son fonctionnement n'est pas détaillé ici. Lors du passage du fluide dans la partie de la deuxième branche 14 située en aval du dispositif à clapet 40 et où se situe l'indicateur visuel 70, l'indicateur visuel 70 déplace cette languette de telle sorte qu'elle devient visible par l'équipe de maintenance. Cette équipe peut donc, en regardant le dispositif à clapet 40 (et l'indicateur visuel 70), savoir immédiatement si le filtre 20 est colmaté et s'il a été by-passé ou non.

Ce système de détection de colmatage, associé au filtre 20, présente cependant l'inconvénient qu'il est nécessaire d'effectuer une inspection de l'indicateur visuel 70 pour savoir si le filtre est totalement colmaté ou seulement partiellement colmaté.

On connaît également le document GB 2,278,295, qui divulgue un filtre similaire.

L'invention vise à proposer un procédé de détection du colmatage d'un filtre qui permette de s'affranchir de l'utilisation de l'indicateur visuel et de son inspection lors de l'opération de maintenance.

Ce but est atteint grâce au fait que le procédé de détection du colmatage du filtre comprend la mesure, à des instants d'échantillonnage successifs, de la différence de pression $\Delta P$ entre l'amont et l'aval du filtre, puis le calcul à différents instants de la dérivée première par rapport au temps $\{\Delta P\}'$ de la différence de pression $\Delta P$, puis l'envoi d'un signal de colmatage $(S_c)$ du filtre lorsque la dérivée première $\{\Delta P\}'$ est égale à zéro.

Grâce à ces dispositions, l'utilisateur (par exemple le pilote de l'avion dans le cas d'un filtre de circuit de turboréacteur) et l'équipe de maintenance sont informés que le filtre est colmaté. En effet, lorsque le filtre est complètement colmaté, la différence de pression $\Delta P$ entre l'amont et l'aval du filtre devient constante et le reste. La dérivée première $\{\Delta P\}'$ de la différence de pression $\Delta P$ devient alors nulle, et le signal de colmatage $S_c$ est envoyé.

Avantageusement le procédé comprend, avant l'envoi du signal de colmatage $(S_c)$, l'envoi d'un signal de seuil $(S_s)$ lorsque la différence de pression $\Delta P$ dépasse une valeur de seuil $\Delta P_s$ inférieure à la différence de pression $\Delta P_c$ correspondant au colmatage du filtre.

Ainsi, on n'utilise qu'un seul capteur pour détecter à la fois le dépassement de la valeur de seuil $\Delta P_s$, et le dépassement de la valeur de colmatage $\Delta P_c$ qui indique le colmatage effectif du filtre, au lieu d'utiliser un détecteur et un indicateur visuel. Il en résulte une réduction de coût à la fois à l'achat, et lors de la maintenance du filtre, comme expliqué ci-dessus. L'utilisateur et l'équipe de maintenance sont informés à la fois du fait que le filtre est partiellement colmaté au-delà d'un niveau correspondant à la valeur seuil, et du fait que le filtre est ou non complètement colmaté, sans avoir à effectuer d'inspection de l'indicateur visuel.

L'invention concerne également un dispositif de détection du colmatage d'un filtre d'un fluide, monté sur un circuit de ce fluide.

Selon l'invention, ce dispositif de détection comprend : un capteur raccordé sur le circuit en amont et en aval du filtre, et apte à mesurer, à des instants d'échantillonnage successifs, la différence de pression $\Delta P$ entre l'amont et l'aval du filtre; et un calculateur apte à calculer à différents instants la dérivée première par rapport au temps $\{\Delta P\}'$ de la différence de pression $\Delta P$, et apte à envoyer un signal de colmatage $(S_c)$ du filtre lorsque la dérivée première $\{\Delta P\}'$ est égale à zéro.

Avantageusement le calculateur est apte à envoyer, avant l'envoi du signal de colmatage $(S_c)$, un signal de seuil $(S_s)$ lorsque la différence de pression $\Delta P$ dépasse une valeur de seuil $\Delta P_s$ inférieure à la différence de pression de colmatage $\Delta P_c$ correspondant au colmatage du filtre.

L'invention sera bien comprise et ses avantages apparaîtront mieux, à la lecture de la description détaillée qui suit, d'un mode de réalisation représenté à titre d'exemple non limitatif. La description se réfère aux dessins annexés sur lesquels :

- la figure 1 est une représentation schématique d'un filtre et du procédé de détection du colmatage du filtre selon l'art antérieur,
- la figure 2 est une représentation schématique d'un filtre et du procédé de détection du colmatage du filtre selon l'invention,
- la figure 3 montre la variation au cours du temps de la différence de pression $\Delta P$ entre l'amont et l'aval du filtre, la variation de la dérivée première de cette différence de pression $\Delta P$ et la variation de la dérivée seconde de cette différence de pression $\Delta P$.

La figure 2 montre un filtre 20 monté sur une branche principale 10 d'un circuit de fluide. Le filtre 20 peut par exemple être monté sur un circuit de fluide d'une turbomachine. Ce fluide peut être par exemple un lubrifiant tel que de l'huile, ou un carburant. En amont de ce filtre 20, la branche principale 10 se scinde en deux branches, une première branche 12 qui prolonge la branche principale 10 et sur laquelle est monté le filtre 20, et une deuxième branche 14 sur laquelle est monté un dispositif à clapet 40. En aval du dispositif à clapet 40, la deuxième branche 14 rejoint la première branche 12 en aval du filtre 20 pour reformer la branche principale 10, de telle sorte que le dispositif à clapet 40 est monté en dérivation par rapport au filtre 20. Le fluide circule sur la figure 2 de la gauche vers la droite comme illustré par la flèche F.

Il est raccordé sur la première branche 12 du filtre 20, de part et d'autre du filtre 20, un capteur 160. Ainsi, une troisième branche 16 du circuit de fluide relie la première branche 12 en amont du filtre 20 et la première branche 12 en aval du filtre 20 au capteur 160, qui est monté sur cette troisième branche 16. Le raccordement de la troisième branche 16 en amont du filtre 20 se situe donc en aval du raccordement de la deuxième branche 14 qui est en amont du filtre 20, et le raccordement de la troisième branche 16 en aval du filtre 20 se situe donc en amont du raccordement de la deuxième branche 14 qui est en aval du filtre 20. Il serait également possible de raccorder, en amont du filtre 20, la troisième branche 16 sur la branche principale 10 en amont de l'endroit ou exactement à l'endroit où la deuxième branche 14 se raccorde à cette branche principale 10, et de raccorder, en aval du filtre 20, la troisième branche 16 sur la branche principale 10 en aval de l'endroit ou exactement à l'endroit où la deuxième branche 14 se raccorde à cette branche principale 10. Dans tous les cas, la première branche 12 portant le filtre 20 et la troisième branche 16 portant le capteur 160 sont donc en parallèle, et la différence de pression aux bornes du capteur 160 est sensiblement égale à la différence de pression $\Delta P$ (perte de charge) aux bornes du filtre 20. La solution représentée sur la figure 2 (une dérivation de la troisième branche 16 sur la première branche 12, c'est-à-dire au plus près des bornes du filtre 20) est préférable car la différence de pression mesurée par le capteur 160 est alors la plus proche de la différence de pression $\Delta P$ aux bornes du filtre, puisque la perte de charge due à la longueur des branches du circuit n'influence pas la mesure. Le capteur 160 est en outre relié à un calculateur 165 capable de traiter un signal, typiquement un signal électrique. Le capteur 160 est un dispositif connu de l'état de la technique, de même que le calculateur 165 qui lui est associé. Leurs structures ne sont donc pas détaillées ici.

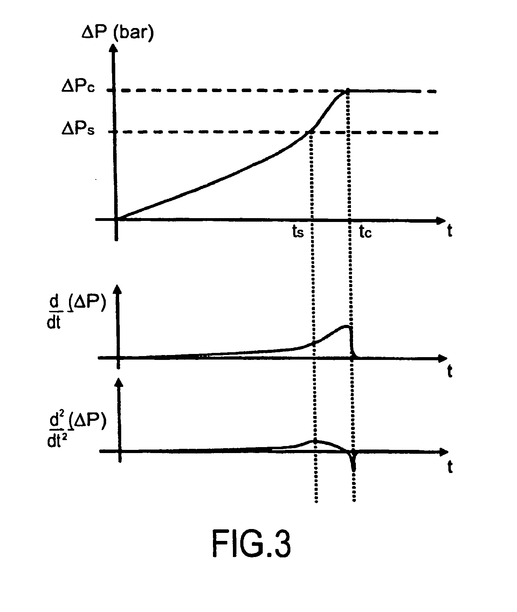

Le capteur 160 mesure en continu la différence de pression $\Delta P$ entre l'amont et l'aval du filtre 20 sur la troisième branche 16. Ainsi, la différence de pression $\Delta P$ est mesurée à intervalles de temps successifs, ces instants où la mesure est effectuée constituant un échantillonnage dans le temps. Idéalement, ces intervalles sont sensiblement réguliers, et les instants où la mesure est effectuée sont suffisamment rapprochés pour reproduire de façon fiable les variations dans le temps de la différence de pression $\Delta P$. Cette variation de la différence $\Delta P$ est représentée sur la figure 3. La différence de pression $\Delta P$ augmente de façon continue depuis zéro jusqu'à la valeur $\Delta P_C$ correspondant au colmatage complet du filtre 20, et à l'ouverture du dispositif à clapet 40 et au passage du fluide au travers de ce dispositif dans la deuxième branche 14. Une fois le filtre 20 colmaté, la différence $\Delta P$ reste constante et égale à la valeur de colmatage $\Delta P_c$.

Le capteur 160 envoie un signal de seuil $S_s$ (typiquement un signal électrique) à l'utilisateur (par exemple au pilote) lorsque la différence de pression $\Delta P$ entre l'amont et l'aval du capteur 160 (c'est-à-dire entre l'amont et l'aval du filtre 20) atteint une valeur de seuil $\Delta P_s$, c'est-à-dire à l'instant $t_s$ sur la figure 3 (ou à l'instant de mesure immédiatement postérieur à $t_s$). La valeur de seuil $\Delta P_s$ est choisie inférieure à la valeur de colmatage $\Delta P_c$, comme illustré sur la figure 3 (par exemple 90% de cette valeur critique). Ainsi, lorsque le signal provenant du capteur 160 est reçu par l'utilisateur, ce dernier sait que le filtre 20 doit être remplacé prochainement. Cette information est relayée à l'équipe de maintenance, qui effectue alors ce remplacement en temps utile lors d'une prochaine opération de maintenance.

De plus, grâce au fait que la différence de pression $\Delta P$ est mesurée en continu par échantillonnage, le calculateur 165 peut utiliser cette mesure en continu pour calculer, à chaque instant de l'échantillonnage, ou à plusieurs de ces instants, la dérivée $\frac{d}{dt}(\Delta P)$ de la différence $\Delta P$ par rapport au temps (cette dérivée est en fait la dérivée du signal de mesure envoyé par le capteur 160 au calculateur 165, ce signal de mesure étant proportionnel à la différence $\Delta P$). On notera $\{\Delta P\}'$ cette dérivée première. Ainsi, le calcul de la dérivée $\frac{d}{dt}(\Delta P)$ à un instant quelconque $t_1$ (notée $\frac{d}{dt}(\Delta P)]_1$

ou $\{\Delta P\}_1$) peut se faire en utilisant par exemple deux mesures $\Delta P_1$ et $\Delta P_2$ de la différence de pression $\Delta P$ à l'instant $t_1$ et à un instant suivant $t_2$, et en appliquant la formule :

$$\frac{d}{dt}\left(\Delta P\right)\Big]_1 = \frac{\Delta P_2 - \Delta P_1}{t_2 - t_1} \qquad (\text{I})$$

Plus les instants $t_1$ et $t_2$ sont rapprochés, plus le calcul de la dérivée est précis. Idéalement on choisira donc comme instants $t_1$ et $t_2$ deux instants d'échantillonnage successifs. On obtient ainsi une mesure en continu de la dérivée $\{\Delta P\}'$ de la différence de pression entre l'amont et l'aval du filtre 20.

Lorsque le filtre 20 est complètement colmaté (c'est-à-dire à l'instant $t_c$ sur la figure 3) la différence de pression $\Delta P$ entre l'amont et l'aval du filtre 20 devient constante et le reste (avant colmatage du filtre la différence de pression est croissante avec le temps, et donc sa dérivée est strictement positive). La dérivée $\{\Delta P\}'$ de la différence de pression devient alors nulle, comme illustré sur la figure 3 qui représente l'évolution de la dérivée $\{\Delta P\}'$ en fonction du temps. Lorsque la dérivée $\{\Delta P\}'$ s'annule (c'est-à-dire à un instant de mesure égal ou immédiatement supérieur à $t_c$), le calculateur 165 envoie un signal de colmatage $S_c$ à l'utilisateur, lequel est alors informé que le filtre 20 est totalement colmaté.

Ainsi, en utilisant un seul capteur (le capteur 160) et un calculateur 165, il est possible d'informer l'utilisateur (et donc l'équipe de maintenance) du fait que le filtre 20 est partiellement ou complètement colmaté, sans être obligé d'utiliser d'indicateur visuel sur le dispositif à clapet 40.

Le calculateur 165 peut être incorporé dans le capteur 160 ou être séparé de ce dernier. Dans ce dernier cas, le calculateur 165 peut être par exemple inclus dans le boîtier de suivi moteur EMU ("Engine Monitoring Unit") ou dans le boîtier avion (boîtier de maintenance).

Afin de confirmer le fait que le filtre est complètement colmaté, il est possible de configurer le calculateur 165 pour que le signal de colmatage $S_c$ soit envoyé seulement lorsque la dérivée première $\{\Delta P\}'$ est égale à zéro à au moins deux instants successifs. En effet, le calculateur 165 pourrait par erreur calculer une dérivée première nulle, ou le calcul pourrait être fait à l'extrémum d'une fluctuation de la différence de pression $\Delta P$ (et donc donner une dérivée première nulle). La probabilité qu'une telle erreur se produise sur deux instants distincts étant minime, il devient alors certain que le filtre est complètement colmaté lorsque la dérivée première $\{\Delta P\}'$ est égale à zéro à deux instants successifs (par exemple deux instants d'échantillonnage successifs).

Il est également possible de confirmer le fait que le filtre est complètement colmaté en calculant la dérivée seconde $\frac{d^2}{dt^2}(\Delta P)$ de la différence de pression $\Delta P$. En effet, lorsqu'une dérivée première est nulle sur un intervalle de temps de longueur non-nulle (et non seulement en un point), la dérivée seconde est nulle sur cet intervalle. Ainsi, en calculant, grâce au calculateur 165, à la fois la dérivée première $\{\Delta P\}'$ de la différence de pression $\Delta P$ à un instant $t_1$ donné et sa dérivée seconde (notée $\{\Delta P\}''$) à cet instant $t_1$, on s'assure que la différence de pression $\Delta P$ est constante sur un intervalle entourant l'instant $t_1$. Dans le cas présent, cela signifie que la différence de pression $\Delta P$ est constante à tout instant supérieur à $t_1$, et donc que le filtre 20 est totalement colmaté. Effectivement, on voit sur la figure 3 que la dérivée seconde de la différence de pression $\Delta P$ est nulle à tout instant t supérieur à l'instant $t_c$ où le filtre devient complètement colmaté. Le calcul de la dérivée seconde $\{\Delta P\}''$ à un instant quelconque $t_1$ (notée $\frac{d^2}{dt^2}(\Delta P)\Big]_1$ ou $\{\Delta P\}_1$) peut se faire en utilisant par exemple deux mesures $\Delta P_1$ et $\Delta P_2$ de la différence de pression à l'instant $t_1$ et à un instant suivant $t_2$ (par exemple l'instant de l'échantillonnage suivant l'instant $t_1$), et en appliquant la formule suivante conjointement avec la formule (I) :

$$\frac{d^2}{dt^2}\left(\Delta P\right)\Big]_1 = \frac{\frac{d}{dt}\left(\Delta P\right)\Big]_2 - \frac{d}{dt}\left(\Delta P\right)\Big]_1}{t_2 - t_1} \qquad (\text{II})$$

Ainsi, afin de confirmer que le filtre est complètement colmaté, il est possible de configurer le calculateur 165 pour qu'il calcule la dérivée seconde par rapport au temps $\{\Delta P\}''$ de la différence de pression $\Delta P$ à différents instants, et pour que le signal de colmatage $S_c$ soit envoyé à l'utilisateur seulement lorsque la dérivée seconde $\{\Delta P\}''$ et la dérivée première $\{\Delta P\}'$ sont égales à zéro. Cette situation ne pouvant se produire qu'à des instants postérieurs à l'instant de colmatage $t_c$, on est alors certain que le filtre est totalement colmaté.

Alternativement, étant donné que lorsqu'une dérivée première est nulle sur un intervalle de temps de longueur non-nulle la dérivée d'ordre N (avec N supérieur à 2) est nulle sur cet intervalle, en calculant à un instant $t_1$ donné à la fois la dérivée première $\{\Delta P\}'$ de la différence de pression $\Delta P$ et sa dérivée d'ordre N (notée $\{\Delta P\}^N$), on s'assure que la différence de pression $\Delta P$ est constante à tout instant supérieur à $t_1$, et donc que le filtre 20 est totalement colmaté. La dérivée d'ordre N est calculée de façon triviale en itérant la formule (II).

L'invention concerne également un dispositif de détection du colmatage du filtre 20, comprenant un capteur 160 et un calculateur 165 fonctionnant comme indiqué ci-dessus.

## Revendications

1. Procédé de détection du colmatage d'un filtre (20) d'un fluide, qui comprend l'étape suivante :

   - on monte un dispositif à clapet (40) en dérivation dudit filtre, qui ne laisse passer le fluide que lorsque la différence de pression entre l'amont et l'aval de ce dispositif à clapet est supérieure à une valeur critique ($\Delta P_c$) correspondant au colmatage du filtre,
   **caractérisé en ce qu'**il comprend en outre les étapes suivantes :
   - on mesure, à des instants d'échantillonnage successifs, la différence de pression $\Delta P$ entre l'amont et l'aval dudit filtre (20),
   - on calcule à différents instants la dérivée première par rapport au temps $\{\Delta P\}$ de ladite différence de pression $\Delta P$,
   - on envoie un signal de colmatage ($S_c$) dudit filtre (20) lorsque ladite dérivée première $\{\Delta P\}'$ est égale à zéro.

2. Procédé selon la revendication 1, **caractérisé en ce qu'**il comprend, avant ledit envoi du signal de colmatage ($S_c$), l'envoi d'un signal de seuil ($S_s$) lorsque ladite différence de pression $\Delta P$ dépasse une valeur de seuil $\Delta P_s$ inférieure à la différence de pression $\Delta P_c$ correspondant au colmatage dudit filtre (20).

3. Procédé selon la revendication 1 ou 2, **caractérisé en ce que** ledit signal de colmatage ($S_c$) est envoyé seulement lorsque ladite dérivée première $\{\Delta P\}'$ de la différence de pression est égale à zéro à au moins deux instants successifs.

4. Procédé selon la revendication 1 ou 2, **caractérisé en ce qu'**il comprend en outre le calcul à différents instants de la dérivée seconde par rapport au temps $\{\Delta P\}''$ de ladite différence de pression $\Delta P$, ledit signal de colmatage ($S_c$) étant envoyé seulement lorsque ladite dérivée seconde $\{\Delta P\}''$ et ladite dérivée première $\{\Delta P\}'$ sont égales à zéro.

5. Procédé selon l'une quelconque des revendications 1 à 4, **caractérisé en ce que** ledit filtre (20) est un filtre à huile ou un filtre à carburant.

6. Procédé selon l'une quelconque des revendications précédentes, **caractérisé en ce que** ledit filtre (20) est monté sur un circuit de fluide d'une turbomachine.

7. Dispositif de détection du colmatage d'un filtre (20) d'un fluide, destiné à être monté sur un circuit de ce fluide, qui comprend un dispositif à clapet (40) raccordé sur ledit circuit en amont et en aval dudit filtre (20), et qui ne laisse passer le fluide que lorsque la différence de pression entre l'amont et l'aval de ce dispositif à clapet est supérieure à une valeur critique ($\Delta P_c$) correspondant au colmatage du filtre, **caractérisé en ce qu'**il comprend en outre : un capteur (160) raccordé sur ledit circuit en amont et en aval dudit filtre (20), et apte à mesurer, à des instants d'échantillonnage successifs, la différence de pression $\Delta P$ entre l'amont et l'aval dudit filtre (20); et un calculateur (165) apte à calculer à différents instants la dérivée première par rapport au temps $\{\Delta P\}'$ de ladite différence de pression $\Delta P$, et apte à envoyer un signal de colmatage ($S_c$) dudit filtre (20) lorsque la dérivée première $\{\Delta P\}'$ est égale à zéro.

8. Dispositif de détection selon la revendication 7, **caractérisé en ce que** ledit calculateur (165) est apte à envoyer, avant l'envoi dudit signal de colmatage ($S_c$), un signal de seuil ($S_s$) lorsque ladite différence de pression $\Delta P$ dépasse une valeur de seuil $\Delta P_s$ inférieure à la différence de pression de colmatage $\Delta P_c$ correspondant au colmatage dudit filtre (20).

9. Dispositif de détection selon la revendication 7 ou 8, **caractérisé en ce que** ledit calculateur (165) est incorporé dans ledit capteur (160).

10. Dispositif de détection selon l'une quelconque des revendications 7 à 9, **caractérisé en ce que** ledit calculateur (165) est apte à calculer à différents instants la dérivée seconde par rapport au temps $\{\Delta P\}''$ de ladite différence de pression $\Delta P$, et apte à envoyer ledit signal de colmatage ($S_c$) seulement lorsque ladite dérivée seconde $\{\Delta P\}''$ et ladite dérivée première $\{\Delta P\}'$ sont égales à zéro.

11. Ensemble constitué d'un dispositif selon l'une quelconque des revendications 7 à 10 et du circuit de fluide sur lequel est monté ce dispositif.

12. Turbomachine comportant un circuit de fluide muni d'un filtre (20) équipé d'un dispositif de détection selon l'une quelconque des revendications 7 à 10.

**Claims**

1. A method of detecting the clogging of a fluid filter, wherein the method comprises the following steps:

    mounting a bypass device in parallel with said filter, the device allowing the fluid to pass only when the upstream to downstream pressure difference across the bypass device is greater than a critical value $\Delta P_c$ corresponding to the filter clogging;

    • measuring, at successive sampling instants, the upstream to down stream pressure difference $\Delta P$ across said filter;
    • calculating, at different instants, the first time derivative $\{\Delta P\}'$ of said pressure difference $\Delta P$; and
    • sending a clogging signal $S_c$ representative of said filter clogging when said first derivative $\{\Delta P\}'$ is equal to zero.

2. A method according to claim 1, wherein, prior to sending the clogging signal $S_C$, the method includes sending a threshold signal $S_s$ when said pressure difference $\Delta P$ exceeds a threshold value $\Delta P_s$ less than the pressure difference $\Delta P_c$ corresponding to said filter becoming clogged.

3. A method according to claim 1, wherein said clogging signal $S_c$ is sent only when said first derivative $\{\Delta P\}'$ of the pressure difference is equal to zero at at least two successive instants.

4. A method according to claim 1, further including calculating, at different instants, the second time derivative $\{\Delta P\}''$ of said pressure difference $\Delta P$, said clogging signal $S_c$ being sent only when said second derivative $\{\Delta P\}''$ and said first derivative $\{\Delta P\}'$ are equal to zero.

5. A method according to claim 1, wherein said filter is an oil filter or a fuel filter.

6. A method according to claim 1, wherein said filter is mounted in a fluid circuit of a turbomachine.

7. A detector device for detecting the clogging of a fluid filter, the device being for mounting in a circuit for said fluid and comprising:

    a sensor connected to said circuit both upstream and downstream from said filter and suitable for measuring, at successive sampling instants, the pressure difference $\Delta P$ across said filter; a bypass device connected to said circuit upstream and downstream from said filter and allowing the fluid to pass only when the pressure difference across said bypass device is greater than a critical value $\Delta P_c$ corresponding to the filter being clogged; and a processor suitable for calculating, at different instants, the first time derivative $\{\Delta P\}'$ of said pressure difference $\Delta P$, and suitable for sending a clogging signal $S_c$ representative of clogging of said filter when the first derivative $\{\Delta P\}'$ is equal to zero.

8. A detector device according to claim 7, wherein, prior to sending said clogging signal $S_C$, said processor is suitable for sending a threshold signal $S_s$ when said pressure difference $\Delta P$ exceeds a threshold value $\Delta P_s$ less than the clogging pressure difference $\Delta P_c$ that corresponds to said filter being clogged.

9. A detector device according to claim 7, wherein said processor is incorporated in said sensor.

10. A detector device according to claim 7, wherein said processor is suitable for calculating, at different instants, the second time derivative {ΔP}" of said pressure difference ΔP, and is suitable for sending said clogging signal S$_c$ only when both said second derivative {ΔP}" and said first derivative {ΔP}' are equal to zero.

**11.** An assembly constituted by a device according to claim 7 and a fluid circuit having the device mounted therein.

**12.** A turbomachine including a fluid circuit provided with a filter fitted with a detector device according to claim 7.


**Patentansprüche**

**1.** Verfahren zur Erfassung des Verstopfens eines Filters (20) für ein Fluid, das folgenden Schritt umfaßt:

- eine Ventilvorrichtung (40), die das Fluid nur dann passieren läßt, wenn der Druckunterschied zwischen dem stromaufwärtigen Teil und dem stromabwärtigen Teil dieser Ventilvorrichtung größer als ein dem Verstopfen des Filters entsprechender kritischer Wert (ΔP$_c$) ist, wird zu dem Filter parallelgeschaltet,
**dadurch gekennzeichnet, daß** es ferner die folgenden Schritte umfaßt:
- Messen des Druckunterschiedes ΔP zwischen dem stromaufwärtigen Teil und dem stromabwärtigen Teil des Filters (20) zu aufeinanderfolgenden Stichprobenzeitpunkten
- Berechnen der ersten Ableitung nach der Zeit {ΔP}' des Druckunterschiedes ΔP zu unterschiedlichen Zeitpunkten,
- Senden eines Signals für das Verstopfen (S$_c$) des Filters (20), wenn die erste Ableitung {ΔP}' gleich null ist.

**2.** Verfahren nach Anspruch 1, **dadurch gekennzeichnet, daß** es vor dem Senden des Verstopfungssignals (S$_c$) das Senden eines Schwellensignals (S$_S$) umfaßt, wenn der Druckunterschied ΔP einen Schwellenwert ΔP$_S$, welcher geringer als der dem Verstopfen des Filters (20) entsprechende Druckunterschied ΔP$_c$ ist, überschreitet.

**3.** Verfahren nach Anspruch 1 oder 2, **dadurch gekennzeichnet, daß** das Verstopfungssignal (S$_c$) nur dann gesendet wird, wenn die erste Ableitung {ΔP}' des Druckunterschiedes zu wenigstens zwei aufeinanderfolgenden Zeitpunkten gleich null ist.

**4.** Verfahren nach Anspruch 1 oder 2, **dadurch gekennzeichnet, daß** es ferner das Berechnen der zweiten Ableitung nach der Zeit {ΔP}" des Druckunterschiedes ΔP zu unterschiedlichen Zeitpunkten umfaßt, wobei das Verstopfungssignal (S$_c$) nur dann gesendet wird, wenn die zweite Ableitung {ΔP}" und die erste Ableitung {ΔP}' gleich null sind.

**5.** Verfahren nach einem der Ansprüche 1 bis 4, **dadurch gekennzeichnet, daß** das Filter (20) ein Ölfilter oder ein Treibstofffilter ist.

**6.** Verfahren nach einem der vorhergehenden Ansprüche, **dadurch gekennzeichnet, daß** das Filter (20) an einem Fluidkreis einer Turbomaschine angebracht ist.

**7.** Vorrichtung zur Erfassung des Verstopfens eines Filters (20) für ein Fluid, die dazu bestimmt ist, an einem Kreis dieses Fluids angebracht zu werden, umfassend eine Ventilvorrichtung (40), die an dem Kreis stromaufwärts und stromabwärts des Filters (20) angeschlossen ist und die das Fluid nur dann passieren läßt, wenn der Druckunterschied zwischen dem stromaufwärtigen Teil und dem stromabwärtigen Teil dieser Ventilvorrichtung größer als ein dem Verstopfen des Filters entsprechender kritischer Wert (ΔP$_c$) ist, **dadurch gekennzeichnet, daß** sie ferner umfaßt: einen Sensor (160), der an dem Kreis stromaufwärts und stromabwärts des Filters (20) angeschlossen und geeignet ist, zu aufeinanderfolgenden Stichprobenzeitpunkten den Druckunterschied ΔP zwischen dem stromaufwärtigen Teil und dem stromabwärtigen Teil des Filters (20) zu messen; sowie einen Rechner (165), der geeignet ist, zu unterschiedlichen Zeitpunkten die erste Ableitung nach der Zeit {ΔP}' des Druckunterschiedes ΔP zu berechnen, und geeignet ist, ein Signal für das Verstopfen (S$_c$) des Filters (20) zu senden, wenn die erste Ableitung {ΔP}' gleich null ist

**8.** Erfassungsvorrichtung nach Anspruch 7, **dadurch gekennzeichnet, daß** der Rechner (165) geeignet ist, vor dem Senden des Verstopfungssignals (S$_c$) ein Schwellensignal (S$_S$) zu senden, wenn der Druckunterschied ΔP einen Schwellenwert ΔP$_S$, welcher geringer als der dem Verstopfen des Filters (20) entsprechende Verstopfungsdruckunterschied ΔP$_c$ ist, überschreitet.

**9.** Erfassungsvorrichtung nach Anspruch 7 oder 8, **dadurch gekennzeichnet, daß** der Rechner (165) in den Sensor (160) integriert ist.

10. Erfassungsvorrichtung nach einem der Ansprüche 7 bis 9, **dadurch gekennzeichnet, daß** der Rechner (165) geeignet ist, zu unterschiedlichen Zeitpunkten die zweite Ableitung nach der Zeit $\{\Delta P\}''$ des Druckunterschiedes $\Delta P$ zu berechnen, und geeignet ist, das Verstopfungssignal ($S_c$) nur dann zu senden, wenn die zweite Ableitung $\{\Delta P\}''$ und die erste Ableitung $\{\Delta P\}'$ gleich null sind

11. Anordnung bestehend aus einer Vorrichtung nach einem der Ansprüche 7 bis 10 und aus dem Fluidkreis, an dem diese Vorrichtung angebracht ist.

12. Turbomaschine, umfassend einen Fluidkreis, der mit einem Filter (20) versehen ist, das mit einer Erfassungsvorrichtung nach einem der Ansprüche 7 bis 10 ausgestattet ist.

**FIG.1**

**ART ANTERIEUR**

**FIG.2**

FIG.3

**EP 2 095 859 B1**

**RÉFÉRENCES CITÉES DANS LA DESCRIPTION**

**Documents brevets cités dans la description**

- GB 2278295 A